# DEMANDE DE BREVET EUROPEEN

(11) **EP 1 387 184 A1**
(43) Date de publication de la demande: **04.02.2004**
(21) Numéro de dépôt: 02078059.9
(22) Date de dépôt: 25.07.2002
(51) Int. Cl.: G01S 17/00, B60R 1/10, B60R 1/00

(54) **Dispositif de détection du franchissement d'une ligne de marquage de route automobile**

(71) Demandeur: EM Microelectronic-Marin SA, 2074 Marin (CH)
(72) Inventeur: Willemin, Michel, 2523 Lignières (CH); Hirt, Andreas, 2552 Orpund (CH)
(74) Mandataire: Ravenel, Thierry Gérard Louis

(57) **Abrégé**

La présente invention concerne un dispositif de détection du franchissement d'un marquage horizontal de délimitation des voies de circulation d'une chaussée pour véhicule automobile, caractérisé en ce qu'il comprend au moins un boîtier (2) destiné à être placé sous le véhicule et renfermant des moyens permettant de projeter deux faisceaux lumineux (4, 6) sur la chaussée (8) selon deux zones distinctes (10, 12) ne se recouvrant pas, et des moyens pour capter les deux faisceaux lumineux (14, 16) après réflexion sur la chaussée (8).

## Description

La présente invention concerne un dispositif de détection du franchissement d'une ligne de marquage au sol séparant des voies de circulation pour véhicule automobile.

Il peut arriver qu'un automobiliste, circulant par exemple sur la voie de circulation de droite d'une autoroute, empiète involontairement sur la voie de circulation de gauche en franchissant la ligne de marquage qui sépare ces deux voies. Ceci peut créer une situation de danger, en particulier lorsqu'un autre véhicule est entrain d'effectuer une manoeuvre de dépassement. De même, l'automobiliste peut également empiéter sur la voie d'arrêt d'urgence et franchir la ligne de marquage qui sépare la voie de circulation de droite de l'autoroute de ladite voie d'arrêt d'urgence. Ceci peut aussi créer une situation de danger, notamment lorsqu'un autre véhicule est immobilisé sur la voie d'arrêt d'urgence.

Pour alerter l'automobiliste de la situation de danger qui le guette, il a déjà été proposé de remplacer les lignes de marquage classiques qui sont lisses par des lignes de marquage rugueuses. Lorsque les roues d'un véhicule automobile empiètent sur de telles lignes de marquage rugueuses, elles produisent un son caractéristique audible à l'intérieur de l'habitacle du véhicule et qui informe le conducteur qu'il est entrain de commettre un écart de trajectoire. Le bruit cesse aussitôt que le conducteur a corrigé sa trajectoire et est revenu dans sa voie de circulation.

L'apparition des lignes de marquage rugueuses a constitué un réel progrès en matière de sécurité routière. Malheureusement, étant donnée l'étendue des réseaux routiers, toutes les routes ne peuvent être équipées de telles lignes de marquage. En outre, le bruit produit par les roues du véhicule automobile lorsqu'elles empiètent sur une ligne de marquage rugueuse peut être couvert par le bruit du moteur ou le son de l'auto-radio, de sorte que le conducteur peut ne pas être informé de la situation de danger dans laquelle il se trouve.

Pour pallier les inconvénients des systèmes de sécurité passifs tels que les lignes de marquage rugueuses, les constructeurs automobiles ont proposé des systèmes de sécurité actifs embarqués à bord des véhicules. Des essais ont ainsi été menés dans ce sens à l'aide d'une caméra installée sous le véhicule et filmant en continu la chaussée qui défile sous les roues dudit véhicule. Un tel système nécessite cependant un dispositif informatique complexe pour pouvoir analyser les images produites par la caméra et détecter le franchissement d'une ligne de séparation, ce qui le rend particulièrement coûteux et difficile à mettre en oeuvre.

Un autre système de sécurité actif connu comprend une multiplicité d'émetteurs infrarouge associés à des photodétecteurs et disposés sous le pare-chocs avant du véhicule automobile. Chaque capteur de ce système se compose d'un boîtier maître comprenant un émetteur et un récepteur, et d'un boîtier esclave également constitué d'un émetteur et d'un récepteur, ce qui permet un partage de l'électronique afin de pouvoir déphaser les émissions et d'éviter les éblouissements mutuels des capteurs. Dans un exemple de réalisation préféré de ce système, sept capteurs doubles, c'est-à-dire sept paires de boîtiers maîtres et esclaves, sont disposés à intervalles de distance réguliers les uns des autres sous le véhicule de façon à couvrir la largeur entière dudit véhicule.

L'objectif du système décrit ci-dessus n'est pas d'anticiper la détection d'une dérive latérale du véhicule, mais de produire une alarme à partir du moment où l'une des roues dudit véhicule franchit un marquage horizontal de délimitation des voies de circulation. A cet effet, les émetteurs émettent chacun un faisceau de lumière infrarouge en direction de la chaussée. Ces faisceaux de lumière infrarouge se réfléchissent ensuite sur le sol et sont dirigés vers les photodétecteurs qui, en fonction de la quantité de lumière réfléchie, sont capables de déterminer si la lumière s'est réfléchie sur le revêtement de la chaussée (par exemple du béton) ou sur une bande blanche de marquage horizontal. En fonction des informations recueillies par ce système et de l'état du véhicule (vitesse, indication préalable d'une manoeuvre de dépassement par mise en route des feux clignotants ou non), ledit système actionne l'un ou l'autre de deux vibreurs disposés dans le siège du conducteur pour signaler à celui-ci qu'il est entrain de franchir un marquage horizontal de délimitation des voies de circulation par sa droite, respectivement par sa gauche.

Le système de surveillance de trajectoire décrit ci-dessus a pour mérite d'informer rapidement le conducteur des écarts significatifs de trajectoire de son véhicule par rapport à sa file sur la chaussée, écarts dont les causes peuvent être variées : assoupissement, hypovigilance, distraction. Un tel système est moins onéreux qu'un système utilisant une caméra de suivi de trajectoire mais reste néanmoins relativement complexe à mettre en oeuvre. En effet, ce système ne comporte pas moins de quatorze boîtiers maîtres et esclaves, ce qui rend le câblage d'un tel système particulièrement complexe et augmente considérablement le temps de montage et le nombre de pièces nécessaires à leur montage sous le pare-chocs du véhicule. Cette multiplication du nombre de capteurs élémentaires pose également le problème de la fiabilité à long terme d'un tel système. En outre, un capteur double constitué d'un boîtier maître et d'un boîtier esclave constitue un ensemble indissociable dans la mesure où les caractéristiques de fonctionnement du boîtier maître sont étalonnées par rapport à celles du boîtier esclave. Ainsi, en cas de défaillance d'un tel capteur double suite à une panne ou à l'endommagement du pare-chocs avant, il faut remplacer simultanément les deux boîtiers maître et esclave. Par conséquent, les boîtiers maîtres et esclaves doivent être stockés par paire, ce qui pose d'inévitables problèmes de gestion des stocks.

La présente invention a pour but de remédier aux problèmes susmentionnés ainsi qu'à d'autres encore en procurant un système de surveillance de la trajectoire d'un véhicule automobile qui permet, notamment, de limiter le nombre de pièces à utiliser.

A cet effet, la présente invention concerne un dispositif de détection du franchissement d'un marquage horizontal de délimitation des voies de circulation d'une chaussée pour véhicule automobile, caractérisé en ce qu'il comprend au moins un boîtier destiné à être disposé sous le véhicule et renfermant des moyens permettant de projeter deux faisceaux lumineux sur la chaussée selon deux zones distinctes ne se recouvrant pas, et des moyens pour capter les deux faisceaux lumineux après réflexion sur la chaussée.

Grâce à ces caractéristiques, la présente invention permet de regrouper les fonctions maître et esclave des capteurs doubles de l'art antérieur dans un unique boîtier, ce qui simplifie considérablement le câblage d'un tel système et permet de réaliser des économies substantielles, notamment en termes de nombre de pièces de fixation et de temps de montage/démontage. En outre, les boîtiers selon l'invention sont interchangeables, ce qui simplifie notablement la gestion des stocks de tels boîtiers.

Selon un premier mode de réalisation, la présente invention concerne un. dispositif de détection du genre susdécrit, caractérisé en ce que le au moins un boîtier, présentant un axe général de symétrie, renferme une source lumineuse unique émettant un faisceau de lumière primaire en direction de la chaussée, et au moins un photodétecteur destiné à détecter la lumière après réflexion sur la chaussée, deux premiers dispositifs optiques dont les axes optiques sont inclinés d'une première valeur par rapport à l'axe général de symétrie du boîtier étant disposés sur le trajet du faisceau lumineux primaire à sa sortie de la source lumineuse, de façon à scinder ledit faisceau lumineux primaire en deux faisceaux de lumière secondaires guidés sur la chaussée selon deux zones distinctes, et deux deuxièmes dispositifs optiques dont les axes optiques sont inclinés d'une deuxième valeur par rapport à l'axe général de symétrie du boîtier étant disposés sur le trajet des faisceaux de lumière secondaires après que ceux-ci se soient réfléchis sur la chaussée et avant qu'ils n'atteignent le au moins un photodétecteur.

Selon un deuxième mode de réalisation, la présente invention concerne un dispositif du genre susdécrit, caractérisé en ce que le au moins un boîtier, présentant un axe général de symétrie, renferme deux sources lumineuses émettant chacune un faisceau de lumière en direction de la chaussée, et au moins un photodétecteur destiné à détecter la lumière après réflexion sur la chaussée, deux premiers dispositifs optiques dont les axes optiques sont inclinés d'une première valeur par rapport à l'axe général de symétrie du boîtier étant disposés chacun sur le trajet de l'un des faisceaux lumineux à sa sortie de la source lumineuse correspondante, de façon à guider lesdits deux faisceaux de lumière sur la chaussée selon deux zones distinctes, et deux deuxièmes dispositifs optiques dont les axes optiques sont inclinés d'une deuxième valeur par rapport à l'axe général de symétrie du boîtier étant disposés sur le trajet des faisceaux de lumière après que ceux-ci se soient réfléchis sur la chaussée et avant qu'ils n'atteignent le au moins un photodétecteur.

D'autres caractéristiques et avantages de la présente invention ressortiront plus clairement de la description détaillée qui suit d'un dispositif de détection d'écart de trajectoire d'un véhicule automobile conforme à l'invention, cet exemple étant donné à tire purement illustratif et non limitatif seulement en liaison avec le dessin annexé sur lequel :
- la figure 1 est une vue schématique de dessous du pare-chocs avant d'un véhicule automobile équipé du dispositif de détection d'écart de trajectoire conforme à la présente invention;
- la figure 2 est une vue schématique de principe illustrant les trajets aller et retour des faisceaux lumineux issus du dispositif de détection selon l'invention et réfléchis par la chaussée sur laquelle circule le véhicule automobile;
- la figure 3 est une vue en perspective de l'un des boîtiers constituant le système de détection selon l'invention;
- la figure 4 est une vue de face du boîtier représenté à la figure 3;
- la figure 5 est une vue en coupe selon la ligne V-V du boîtier représenté à la figure 4;
- la figure 6 est une vue en coupe selon la ligne VI-VI du boîtier représenté à la figure 4;
- les figures 7a-7c sont des vues schématiques respectivement de face et en coupe selon les lignes A-A' et B-B' du boîtier de détection d'écart de trajectoire selon un premier mode de réalisation;
- les figures 8a-8c sont des vues schématiques respectivement de face et en coupe selon les lignes A-A' et B-B' du boîtier de détection d'écart de trajectoire selon un second mode de réalisation;
- les figures 9a-9c sont des vues schématiques respectivement de face et en coupe selon les lignes A-A' et B-B' du boîtier de détection d'écart de trajectoire selon un troisième mode de réalisation, et
- les figures 10a-10c sont des vues schématiques respectivement de face et en coupe selon les lignes A-A' et B-B' du boîtier de détection d'écart de trajectoire selon un quatrième mode de réalisation.

La présente invention procède de l'idée générale inventive qui consiste à regrouper dans un boîtier unique les éléments maître et esclave des capteurs doubles selon l'art antérieur. Grâce à cette caractéristique, on divise par deux le nombre de boîtiers à installer sous un véhicule pour détecter les éventuels écarts de trajectoire de celui-ci, ce qui permet de réduire sensiblement le nombre de pièces de fixation et les temps de montage/démontage. En outre, les boîtiers constituant le dispositif selon l'invention sont interchangeables, ce qui simplifie considérablement la gestion des stocks.

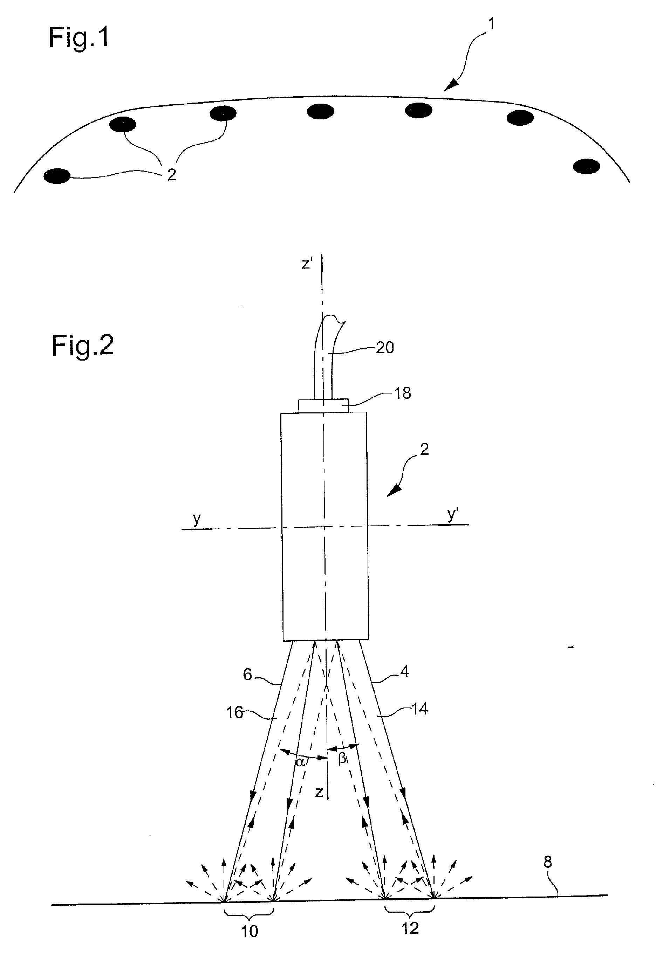

La figure 1 est une vue schématique de dessous du pare-chocs avant d'un véhicule automobile (non représenté) équipé du dispositif de détection d'écart de trajectoire conforme à la présente invention. Désigné dans son ensemble par la référence numérique générale 1, ce pare-chocs est muni d'une pluralité de boîtiers 2 disposés à intervalles de distance sensiblement réguliers le long dudit pare-chocs 1 de façon à couvrir la largeur totale du véhicule automobile ainsi équipé. Dans l'exemple représenté à la figure 1, les boîtiers 2 sont au nombre de sept. Il va de soi que cet exemple est donné à titre purement illustratif seulement et que le nombre de boîtiers 2 pourra varier en fonction, notamment, de la géométrie du pare-chocs 1 et des dimensions du véhicule.

La figure 2 est une vue schématique de principe illustrant les trajets aller et retour des faisceaux lumineux issus de l'un des boîtiers 2 constituant le dispositif de détection selon l'invention, ces faisceaux étant réfléchis par la chaussée sur laquelle circule le véhicule automobile. En effet, et comme cela sera décrit en détail ultérieurement, chaque boîtier 2 comprend des moyens permettant de projeter deux faisceaux lumineux 4 et 6 sur la chaussé 8 selon deux zones distinctes 10 et 12 ne se recouvrant pas, et des moyens pour capter les deux faisceaux lumineux 14 et 16 après réflexion sur la chaussée 8.

Comme on peut le constater à l'examen de la figure 2, les faisceaux lumineux 4 et 6 issus du boîtier 2, et les faisceaux 14 et 16 résultant de la réflexion de la lumière sur la chaussée 8 sont inclinés d'une valeur α, respectivement β, par rapport à l'axe général de symétrie z-z' du boîtier 2, afin que les zones de focalisation 10 et 12 ne se recouvrent pas, et qu'un faisceau lumineux produit par l'une des sources lumineuses ne vienne pas éblouir le photodétecteur coopérant avec l'autre source lumineuse. Préférentiellement mais non limitativement, les faisceaux lumineux formeront avec l'axe de symétrie z-z' du boîtier 2 un même angle d'environ 6°.

Les zones de focalisation 10 et 12 des faisceaux sur la chaussée forment typiquement des taches de lumière dont le diamètre est d'environ cinq centimètres. La précision de mesure sera d'autant meilleure que ces taches seront réparties à intervalles de distance les plus réguliers possibles. On constate d'autre part qu'au niveau de ces zones de focalisation 10 et 12, une partie de la lumière émise diffuse et ne peut donc être collectée par le boîtier 2. Ce dernier comporte quant à lui un connecteur 18 prolongé par un câble 20 qui permet de le relier aux circuits de traitement électroniques des signaux (non représentés) qui sont embarqués à bord du véhicule. Comme, pour des raisons liées à l'ergonomie de l'emplacement où le boîtier 2 doit être fixé, il n'est pas assuré que l'axe de symétrie z-z' dudit boîtier 2 soit parfaitement vertical, on peut prévoir la possibilité de faire pivoter ce boîtier 2 autour d'un axe horizontal y-y' afin d'ajuster au mieux sa position. De même, pour éviter que les projections de saleté provenant de la chaussée n'endommagent ledit boîtier 2, il est également possible de monter celui-ci légèrement incliné par rapport à la verticale.

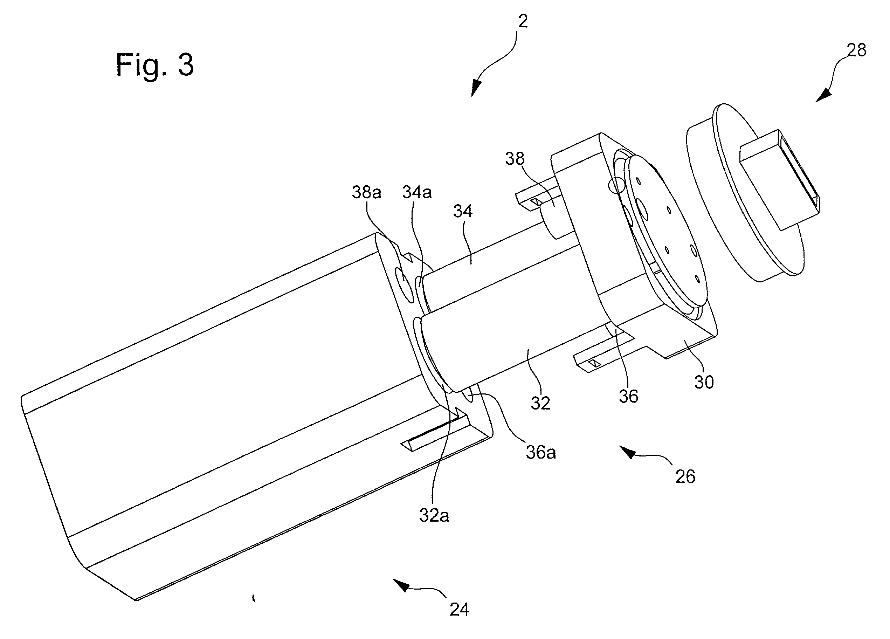

La figure 3 est une vue en perspective et à l'état dissocié d'un boîtier 2. Celui-ci se compose, pour l'essentiel, d'un corps massif 24 de forme sensiblement parallélépipédique, d'un bloc optique 26 et d'un couvercle 28. Le bloc optique 26 comprend une embase 30 dont le contour épouse les formes générales extérieures du corps 24 du boîtier 2 et sur laquelle se dressent deux tubes d'émission optiques 32 et 34 et deux tubes de réception optiques 36 et 38. Le bloc optique est destiné à venir s'insérer dans le corps 24 qui présente, à cet effet, des cavités 32a, 34a et 36a, 38a pour recevoir respectivement les tubes d'émission 32, 34 et les tubes de réception 36 et 38. Les différents éléments constituant un boîtier 2 selon l'invention peuvent être réalisés en tout matériau adapté tel que, notamment, du plastique injecté ou moulé.

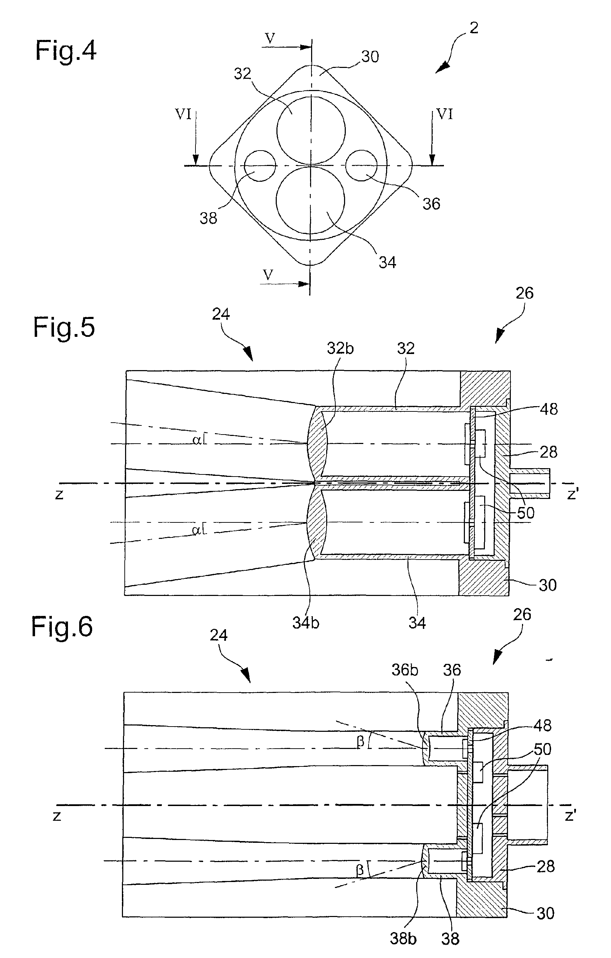

Les figures 5 et 6 sont des vues en coupe, respectivement selon les lignes V-V et VI-VI du boîtier 2 dont la face avant 40 est représentée sur la figure 4. Comme on peut le voir sur ces deux figures, des lentilles 32b, 34b et 36b, 38b sont prévues à l'extrémité des tubes d'émission 32, 34, respectivement de réception 36, 38. Ces lentilles peuvent être de type minéral ou organique, être montées une à une à l'extrémité des tubes ou venir de matière avec le bloc optique 26. Dans ce dernier cas, le bloc optique 26 sera préférentiellement mais non limitativement réalisé par injection d'un matériau plastique transparent à la longueur d'onde utilisée et pouvant additionnellement être opaque aux longueurs d'onde non recherchées. On comprendra que chaque tube optique peut comporter un système de lentilles plus complexe comportant deux ou plusieurs lentilles.

Les lentilles 32b, 34b et 36b, 38b peuvent être des lentilles de révolution, auquel cas leurs axes optiques sont perpendiculaires à leurs faces d'entrée et de sortie respectives. Il faut alors monter ces lentilles inclinées, de façon à ce que leurs axes optiques forment avec l'axe général de symétrie z-z' du boîtier les angles α, respectivement β recherchés. Alternativement, on peut également avoir recours à des lentilles qui ne présentent pas de symétrie axiale et dont les axes optiques sont naturellement inclinés de la valeur recherchée par rapport à l'axe général de symétrie z-z' du boîtier 2.

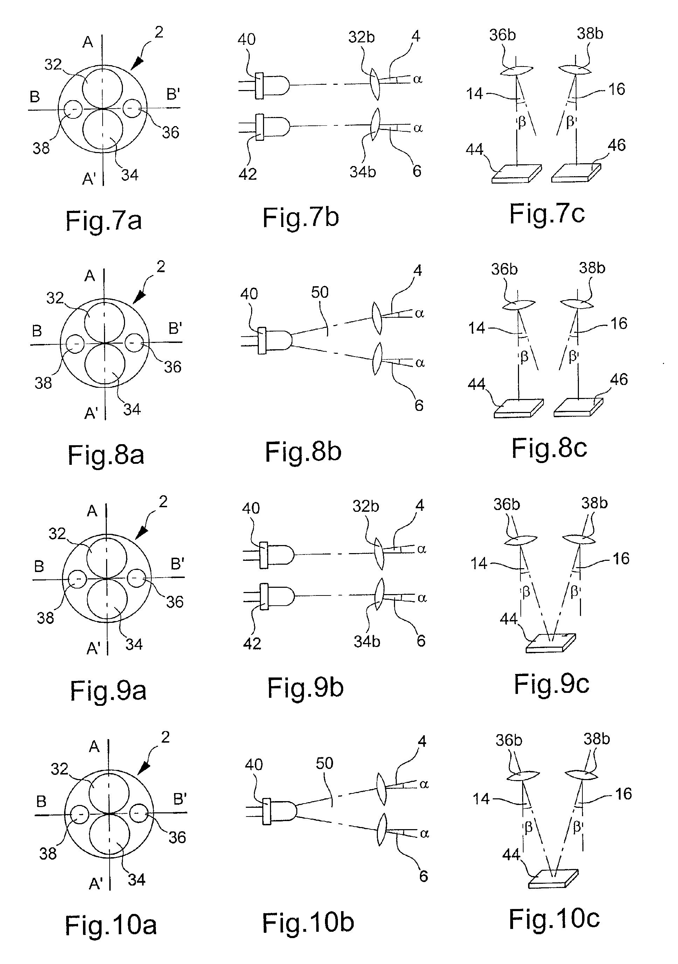

Les figures 7a-7c sont des vues schématiques respectivement de face et en coupe selon les lignes A-A' et B-B' d'un boîtier de détection d'écart de trajectoire conforme à un premier mode de réalisation de l'invention. Selon ce premier mode de réalisation, le boîtier 2 renferme (voir figure 7b) deux sources lumineuses 40 et 42 émettant chacune un faisceau de lumière 4,6 en direction de la chaussée, et deux photodétecteurs 44 et 46 (figure 7c) destinés à détecter la lumière 14, 16 après réflexion sur la chaussée. Deux premiers dispositifs optiques 32b et 34b dont les axes optiques sont inclinés d'une valeur α par rapport à l'axe général de symétrie z-z' du boîtier 2 sont disposés chacun sur le trajet de l'un des faisceaux lumineux 4,6 à sa sortie de la source lumineuse correspondante, de façon à guider lesdits deux faisceaux de lumière 4,6 sur la chaussée selon deux zones distinctes. Deux deuxièmes dispositifs optiques 36b et 38b dont les axes optiques sont inclinés d'une deuxième valeur β (qui peut être égale ou différente de la valeur α) par rapport à l'axe général de symétrie z-z' du boîtier 2 sont, quant à eux, disposés sur le trajet des faisceaux de lumière 14, 16 après que ceux-ci se soient réfléchis sur la chaussée et avant qu'ils n'atteignent les photodétecteurs 44, 46.

Les figures 8a-8c sont des vues schématiques respectivement de face et en coupe selon les lignes A-A' et B-B' d'un boîtier de détection d'écart de trajectoire conforme à un second mode de réalisation de l'invention. Selon ce second mode de réalisation, le boîtier 2 ne renferme plus qu'une seule source lumineuse 40 (voir figure 8b) qui émet un faisceau lumineux primaire qui est scindé en deux faisceaux de lumière secondaires 4,6 guidés sur la chaussée selon deux zones distinctes ne se recouvrant pas. Par contre, le boîtier 2 renferme toujours deux photodétecteurs 44 et 46 (figure 8c) et les deuxièmes dispositifs optiques 36 et 38b qui leur sont associés.

Les figures 9a-9c sont des vues schématiques respectivement de face et en coupe selon les lignes A-A' et B-B' d'un boîtier de détection d'écart de trajectoire conforme à un troisième mode de réalisation de l'invention. Selon ce troisième mode de réalisation, le boîtier 2 renferme (voir figure 9b) deux sources lumineuses 40 et 42 qui émettent chacune un faisceau de lumière 4,6 en direction de la chaussée, et les deux premiers dispositifs optiques 32b et 34b associés auxdites sources lumineuses 40 et 42. Par contre, le boîtier 2 ne renferme plus qu'un seul photodétecteur 44 (figure 9c), les deux deuxièmes dispositifs optiques 36b et 38 b ayant, dans ce cas, pour rôle de diriger les faisceaux de lumière 14, 16 vers l'unique photodétecteur 44 après que lesdits faisceaux 14, 16 se soient réfléchis sur la chaussée.

Enfin, les figures 10a-10c sont des vues schématiques respectivement de face et en coupe selon les lignes A-A' et B-B' d'un boîtier de détection d'écart de trajectoire conforme à un quatrième mode de réalisation de l'invention. Selon ce quatrième mode de réalisation, le boîtier 2 ne renferme plus qu'une seule source lumineuse 40 (voir figure 10b) qui émet un faisceau lumineux primaire qui est scindé en deux faisceaux de lumière secondaires 4,6 guidés sur la chaussée selon deux zones distinctes ne se recouvrant pas. De même, le boîtier 2 ne renferme plus qu'un seul photodétecteur 44 (figure 10c), les deux deuxièmes dispositifs optiques 36b et 38b ayant, dans ce cas, pour rôle de diriger les faisceaux de lumière 14, 16 vers l'unique photodétecteur 44 après que lesdits faisceaux 14, 16 se soient réfléchis sur la chaussée.

Il va de soi que l'invention n'est pas limitée aux modes de réalisation qui viennent d'être décrits et que diverses modifications et variantes simples peuvent être envisagées sans sortir du cadre de l'invention. En particulier, il peut être envisagé de disposer en oblique devant la ou les sources optiques des cloisons percées d'un trou.

## Revendications

1. Dispositif de détection du franchissement d'un marquage horizontal de délimitation des voies de circulation d'une chaussée pour véhicule automobile, **caractérisé en ce qu'**il comprend au moins un boîtier (2) destiné à être placé sous le véhicule et renfermant des moyens permettant de projeter deux faisceaux lumineux (4, 6) sur la chaussée (8) selon deux zones distinctes (10, 12), et des moyens pour capter les deux faisceaux lumineux (14, 16) après réflexion sur la chaussée (8).

2. Dispositif de détection selon la revendication 1, **caractérisé en ce que** le au moins un boîtier (2), présentant un axe général de symétrie (z-z'), renferme une source lumineuse unique (40) émettant un faisceau de lumière primaire (50) en direction de la chaussée (8), et au moins un photodétecteur (44, 46) destiné à détecter la lumière après réflexion sur la chaussée (8), deux premiers dispositifs optiques dont les axes optiques sont inclinés d'une première valeur (α) par rapport à l'axe général de symétrie (z-z') du boîtier étant disposés sur le trajet du faisceau lumineux primaire (50) à sa sortie de la source optique, de façon à scinder ledit faisceau lumineux primaire (50) en deux faisceaux de lumière secondaires (4, 6) projetés sur la chaussée (8) selon deux zones distinctes (10, 12), et deux deuxièmes dispositifs optiques dont les axes optiques sont inclinés d'une deuxième valeur (β) par rapport à l'axe général de symétrie (z-z') du boîtier (2) étant disposés sur le trajet des faisceaux de lumière secondaires (14, 16) après que ceux-ci se soient réfléchis sur la chaussée (8) et avant qu'ils n'atteignent le au moins un photodétecteur (44,46).

3. Dispositif de détection selon la revendication 1, **caractérisé en ce que** le au moins un boîtier (2), présentant un axe général de symétrie (z-z'), renferme deux sources lumineuses (40, 42) émettant chacune un faisceau de lumière (4, 6) en direction de la chaussée (8), et au moins un photodétecteur (44, 46) destiné à détecter la lumière après réflexion sur la chaussée (8), deux premiers dispositifs optiques dont les axes optiques sont inclinés d'une première valeur (α) par rapport à l'axe général de symétrie (z-z') du boîtier (2) étant disposés chacun sur le trajet de l'un des faisceaux lumineux (4,6) à sa sortie de la source lumineuse (40, 42) correspondante, de façon à projeter lesdits deux faisceaux de lumière (4, 6) sur la chaussée (8) selon deux zones distinctes (10, 12), et deux deuxièmes dispositifs optiques dont les axes optiques sont inclinés d'une deuxième valeur (β) par rapport à l'axe général de symétrie (z-z') du boîtier (2) étant disposés sur le trajet des faisceaux de lumière (14,16) après que ceux-ci se soient réfléchis sur la chaussée (8) et avant qu'ils n'atteignent le au moins un photodétecteur (44, 46).

4. Dispositif de détection selon l'une quelconque des revendications 2 ou 3, **caractérisé en ce que** les deux premiers et les deux deuxièmes dispositifs optiques comprennent chacun au moins une lentille (32b, 34b, 36b, 38b).

5. Dispositif selon la revendication 4, **caractérisé en ce que** les lentilles sont de révolution ou ne présentent pas de symétrie axiale.

6. Dispositif de détection selon l'une quelconque des revendications 4 ou 5, **caractérisé en ce que** les lentilles (32b, 34b, 36b, 38b) sont de type minéral.

7. Dispositif de détection selon l'une quelconque des revendications 4 ou 5, **caractérisé en ce que** les lentilles (32b, 34b, 36b, 38b) sont de type organique.

8. Dispositif de détection selon l'une quelconque des revendications 4 à 7, **caractérisé en ce que** le boîtier (2) comprend un corps (24) et un bloc optique (26) qui porte les lentilles.

9. Dispositif de détection selon la revendication 8, **caractérisé en ce que** les lentilles (32b, 34b, 36b, 38b) sont montées individuellement sur le bloc optique (26).

10. Dispositif de détection selon la revendication 8, **caractérisé en ce que** les lentilles (32b, 34b, 36b, 38b) viennent de matière avec le bloc optique (26).

11. Dispositif de détection selon l'une quelconque des revendications 7 à 10, **caractérisé en ce que** le bloc optique (26) comprend une embase (30) sur laquelle se dressent deux tubes optiques d'émission (32, 34) et deux tubes optiques de réception (36, 38).

12. Dispositif de détection selon la revendication 11, **caractérisé en ce que** le corps (24) du boîtier (2) présente des cavités (32a, 34a, 36a, 38a) destinées à recevoir les tubes d'émission (32, 34) et de réception (36, 38) du bloc optique (26).

13. Dispositif de détection selon l'une quelconque des revendications 2 à 12, **caractérisé en ce que** les sources lumineuses (40, 42) comprennent des diodes électrolumiscentes émettant dans l'infrarouge.

14. Dispositif de détection selon l'une quelconque des revendications 2 à 13, **caractérisé en ce que** les sources lumineuses (40, 42) et les photorécepteurs (44, 46) sont montés par SMD ou par flip-chip sur un circuit imprimé (48).

15. Dispositif de détection selon l'une quelconque des revendications 1 à 14, **caractérisé en ce que** les faisceaux lumineux (4, 6) sont focalisés à la surface de la chaussée (8).

16. Dispositif selon l'une quelconque des revendications 2 à 15, **caractérisé en ce que** les deux premiers et les deux deuxièmes dispositifs optiques comprennent un écran disposé en oblique devant les sources lumineuses (40, 42) et percé d'un trou.
